# EUROPEAN PATENT APPLICATION

(11) **EP 1 707 288 A1**
(43) Date of publication of application: **04.10.2006**
(21) Application number: 04704737.8
(22) Date of filing: 23.01.2004
(51) Int. Cl.: B22C 7/02, B22C 9/04, B22C 9/10, B29C 41/14, B29C 59/00

(54) **METHOD OF SMOOTHING SURFACE AND PROCESS OF LOST WAX PRECISION CASTING WITH RESIN MODEL HAVING ITS SURFACE SMOOTHED BY THE METHOD**

(71) Applicant: Shonan Design Co., Ltd., Sagamihara-shi, Kanagawa-ken 2291132 (JP)
(72) Inventor: KITA, Taro, c/o SHONAN DESIGN CO., LTD., Sagamihara-shi, Kanagawa 2291132 (JP); KAMATA, Kazuki, c/o SHONAN DESIGN CO., LTD., Sagamihara-shi, Kanagawa 2291132 (JP); MATSUMURA, Minoru, c/o SHONAN DESIGN CO., LTD., Sagamihara-shi, Kanagawa 2291132 (JP); SAITO, Akio, c/o SHONAN DESIGN CO., LTD., Sagamihara-shi, Kanagawa 2291132 (JP); KIKUCHIHARA, Masato, c/o SHONAN DESIGN CO., LTD., Sagamihara-shi, Kanagawa 2291132 (JP)
(74) Representative: Gesthuysen, von Rohr & Eggert
(86) International application number: PCT/JP2004/000596
(87) International publication number: WO 2005/070587

(57) **Abstract**

When a powder-sintered laminated resin model of powdery resin fabricated according to sintering / laminating shaping technique is applied to lost wax precision casting, casting products have rough finished surface causing a marked drop of commercial value. Thus, there is provided a method for smoothing the porous uneven surface of powder-sintered laminated resin model, comprising a resin impregnation step of dipping the powder-sintered laminated resin model (A) in a two-pack reaction hardening type urethane resin solution (B) with work time of 1 to 5 minutes and viscosity of 7 to 30 Pas and effecting pressure reduction so as to impregnate the surface of the resin model (A) with the two-pack reaction hardening type urethane resin solution (B) and a resin hardening step of updrawing the powder-sintered laminated resin model (A) having been impregnated with the two-pack reaction hardening type urethane resin solution (B) from the two-pack reaction hardening type urethane resin solution (B) and hardening the same.

## Description

### TECHNICAL FIELD

The present invention relates to a method for smoothing a surface of a powder-sintered laminated resin model (A) with a porous rough surface fabricated according to sintering/laminating shaping technique. In detail, a surface of a model obtained by burning and laminating impalpable powder of resin is made smooth by radiating a carbon dioxide gas laser beam controlled by a computer to it, the resulting model is adapted to a lost wax precision casting as an alternative model of a wax model.

### BACKGROUND OF THE INVENTION

Firstly, a precision casting method achieved by adopting the lost wax process in the related art is explained. Next, a model used as a model for a lost wax precious casting is explained and then a powder-sintered laminated resin model is explained. Besides, we explain about prior arts that a resin layer is provided on a surface of the powder-sintered laminated resin model with porous roughness.

Firstly, a lost wax precision casting method is explained. The lost wax process casting includes manufacturing steps in which; a wax model achieving a shape identical to the shape of a cast product is manufactured by pouring a melted wax component into a die, cooling the wax component and then disengaging the wax from the die; a hollow casting mold is manufactured by coating the surface of the wax model with a refractory material, heating the wax model to cause the wax model to melt and flow out and then burning off the wax through high temperature baking; and a molten alloy is poured into the hollow casting mold, after which the alloy is cooled and set and the cast product is taken out by splitting off the casting mold.

Next, the model used in the lost wax precision casting method is explained. Model material used in the lost wax precision casting method is generally a wax component. Numerous research and development efforts about the model material are performed. The wax component constituting wax models used in the lost wax process is normally a blend of paraffin, rosin, carnauba wax and terephthlalic acid. Possible compositions that may be adopted for the wax component are described in detail in Casting Guidebook (edited by the Japanese Casters Association). In addition, the efficacy of a wax component containing melamine particles blended therein has been reported in recent years (see Japanese Unexamined Patent Publication No.H5-38549). While the use of the wax model is advantageous in that the wax component becomes melted at high temperature and allows for easy dewaxing, there is a limit to the extent to which the mechanical strength of the model itself can be improved as long as a burn-off wax model is utilized. Another type of model, achieved through a combination of a wax model and a synthetic resin laminated thereupon, has also been proposed. Japanese Unexamined Patent Publication No.H5-23791 discloses a model achieved by forming a synthetic resin film over the wax surface. Japanese Unexamined Patent Publication No.H5-329174 discloses a dental inlay casting model constituted with a heat meltable resin. In addition, the Japanese Unexamined Patent Publication No.H7-9084 discloses a model achieved by laminating a lost wax base on a photohardening resin sheet. Japanese Unexamined Patent Publication No.H7-299542 discloses a model achieved by applying a wax plastic material onto an ornamental model with fine features constituted of cotton yarn and a synthetic material. Japanese Unexamined Patent Publication No.H7-47443, on the other hand, discloses a model achieved by inserting a photohardening resin model or heat meltable resin laminated model into a die and injection-molding wax, Furthermore, Japanese Unexamined Patent Publication No. 2000-263186 discloses a model achieved by laminating a lost wax base on an ultraviolet hardening resin model. As the examples quoted above indicate, partial or full use of a synthetic resin in the material used to form a model has become increasingly common. In most applications, the synthetic resin is used to better ensure that the shape of the wax model is retained in a desirable manner and to facilitate model production through simple processes.

Recently, as digitization of molding technology is developed, a computer controlling laminating layers casting technique such as an optical molding method using photohardening resin, a paper laminating molding method using paper, powder-sintered laminated molding method or the like is developed.

The optical molding method is that ultraviolet rays controlled by a computer are emitted to photo-setting type resin solution to be hardened in doughnut disc shape in turn so as to be laminated in order to obtain a cubic molding. On the other hand, the powder-sintered laminated molding method is that carbon dioxide gas laser beams controlled by a computer are emitted to impalpable powder of resin to melt, fuse and laminate it for molding. As a result of considering the model produced in thus lamination molding method as an alternative of a wax model for the lost wax precision casting, because polystyrene powder-sintered laminated model with high temperature melt flown-off performance is promising, laser-sintered type RP device INT made in EOS Co., Ltd. / resin powder P is recommended. As a precious powdery resin-sintered model for the lost wax casting in EOS, polystyrene powder (particle size: 60 -80 µm) is used.

On the other hand, the most popular solid surface smoothing method is to apply coating to the solid surface. Three purposes of the painting are to protect a foundation, to give a fine spectacle and to give enhance of consciousness. Smoothing of a surface is present in giving of a surface property. Thickness of coating is usually 10 - 30 µm at the most and 100 - 200 µm in a thick coating, so that surface smoothing is performed in thus thickness range.

However, in the case that the foundation has larger roughness than the above range, it is necessary to level the roughness or unevenness by applying putty. In the case that a main purpose of applying putty is smoothing of the surface, it is general to paint after sandpapering the dry hardened putty surface. Besides, also by putting up flat paper, film or the like on the surface of the solid, an effect of smoothing surface can be produced. Putting up of hanging paper, putting up of decorative film or the like aims at protection or design similarly to painting. On the other hand, there are many cases that resin solution impregnates from the surface of the solid into the porous portions inside the solid to effect increasing of strength, increasing of durability and a special surface property while the surface smoothing is given. For instance, there is concrete containing polymer that MMA monomer impregnates from a surface of concrete into the inner part and then free-radical polymerization is performed. Because this makes strength and durability increase, it is used in marine civil engineering works. Though roughness is always present on the surface of the concrete, in the case of the polymer containing concrete, the roughness of the concrete surface is made smooth incidentally. A method that polymeric monomer impregnates from the surface of wood into the inner part is similar to the above mentioned.

Thus, a method in the broad sense that the specific effect is produced by providing a specific resin layer on a surface of a specific solid, but purposes and effects thereof are provided with specificities respectively.

As a prior art of a method so as to smooth a surface with porous roughness of the powder-sintered laminated model, EOS discloses a working mode so as to apply a wax component to a surface of the model, but there is no method which has been reported yet.

The model for the lost wax precision casting produced in the process of the powder-sintered laminated casting is that particles whose particle size is 60 - 80 µm are in a condition of fusing partly due to surface melting by emitting carbon oxide laser beams controlled by a computer to resin powder, and because the lamination pitch is 0.05 - 0.2 mm, it is confirmed visually that roughness of the surface is confirmed visibly and it is confirmed clearly in touch that the rough surface where the particles are arranged successively. When the powder-sintered laminated model is adapted to the lost wax precision casting, because the roughness surface of the model is traced to the inner surface of the mold and the inner surface of the mold is traced to the surface of the molding article, a smooth surface, a sharpen edge and a smooth curved surface of the molding article is difficult to be achieved, so that the molding article is far from a visually superior molding article.

Thus, a big default of the powder-sintered laminated casting process is that lamination pitches appear on the model surface, that steps are produced on a curved surface because of stepped lamination and that a smooth surface, a smooth curved surface and a sharpen edge are difficult to be achieved because traces of the particle size are remained on the surface due to melting and fusing fine particles.

Accordingly, if the powder-sintered laminated resin model made of powdery resin and produced in the sintered and laminated layer casting process is adapted to the lost wax precision casting, a finished surface of the molding article is rough, so that commercial value of it is decreased largely.

Therefore, the surface of the powder-sintered laminated resin model must be improved so as to be smooth.

### DISCLOSURE OF THE INVENTION

Accordingly, a method for smoothing a surface of a powder-sintered laminated resin model with a porous rough surface according to the present invention comprises a resin impregnation step of dipping the powder-sintered laminated resin model (A) in a two-pack reaction hardening type urethane resin solution (B) with a work life of 1 to 5 minutes and viscosity of 7 to 30 Pas and then decreasing pressure so as to impregnate the surface of the resin model (A) with the two-pack reaction hardening type urethane resin solution (B); and a resin hardening step of bringing up the powder-sintered laminated resin model (A) impregnated with the two-pack reaction hardening type urethane resin solution (B) from the two-pack reaction hardening type urethane resin solution (B) and hardening the resin model (A).

Besides, the two-pack reaction hardening type urethane resin solution (A) preferably comprises multifunctional polyol component (a), multifunctional polyisocyanate component (b) and a plasticizer component (c), and an average functional group of the multifunctional polyol component (a) is preferably in a range from 2.0 to 4.0, an average functional group of the multifunctional polyisocyanate component (b) is preferably in a range from 3.0 to 5,0, and a ratio NCO/OH is preferably in a range from 0.7 to 1.0,

Moreover, the two-pack reaction hardening type urethane resin solution (A) preferably contains a plasticizer component (c) of 10 - 30 % which is in a liquid state at normal temperature and polyether chains having a chemical structure indicated in the chemical structural formula as follows at 5 - 35 wt% thereof.

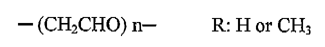

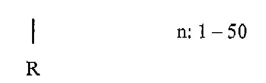

Furthermore, the plasticizer component (c) is preferably micro-dispersed through phase separation at raid reaction hardening of the two-pack reaction hardening type urethane resin solution (B).

Moreover, it is preferred that the powder-sintered laminated resin model having a surface smoothed by the present invention is used in the lost wax precision casting method.

### BRIEF EXPLANATION OF THE DRAWINGS

Fig. 1 is a plan view showing one example of a resin model;
Fig. 2 is a partly enlarged section view enlarging a part of the resin model shown in Fig. 1;
Fig. 3 is an enlarged section view further enlarging a part shown in Fig. 2;
Fig. 4 is an explanatory diagram illustrating a resin impregnation step;
Fig. 5 is an explanatory diagram illustrating a resin hardening step; and
Fig. 6 is a partly enlarged section view of the resin model after the resin hardening step.

### BEST MODE FOR CARRYING OUT THE INVENTION

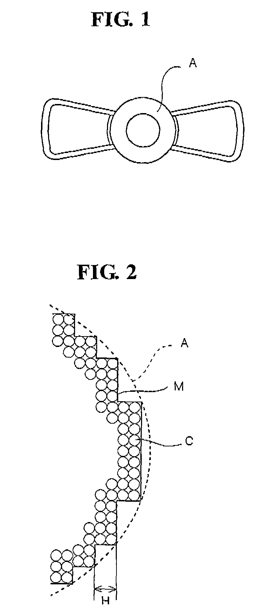

Figs. 1 to 6 shows processes for performing surface smoothing of a sintered and laminated resin model (hereinafter, resin model) according to a working mode of the present invention. Hereinafter, the working mode of the present invention is explained according to the drawings.

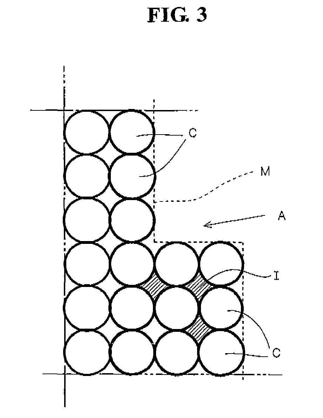

Fig. 1 shows a resin model (A) for an automobile handle as one example of the sintered and laminated resin model. This is a resin model formed by sintering and laminating polystyrene powder. Fig. 2 shows an enlarged part of an outer circumferential portion of the resin model (A) of the automobile handle. Fig. 3 shows further enlargement of the part shown in Fig. 2. As shown in Figs. 2 and 3, fused fine powder polystyrene particles C are laminated at lamination pitch H like stairs.

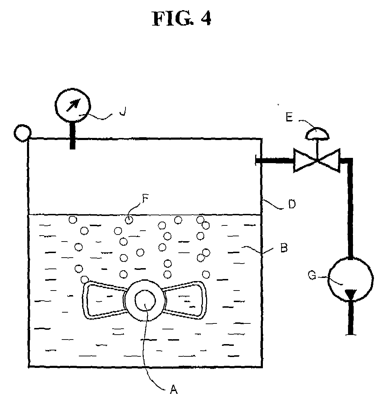

Fig. 4 shows that: the resin model (A) shown in Fig. 1 is impregnated with two-pack reaction hardening type urethane resin solution (B) with a work life of 1 to 5 minutes and viscosity of not more than 30 Pas in a container (D), a decompression valve (E) is opened and a vacuum pump (G) is operated so as to decrease pressure. Thus, the air of hollow parts (I) (Fig. 3) communicating to an outside is discharged from a surface of the resin model (A) as bubbles (F), so that the two-pack reaction hardening type urethane resin solution (B) impregnates into the hollow parts (I). Note that a mark (J) indicates a pressure gauge,

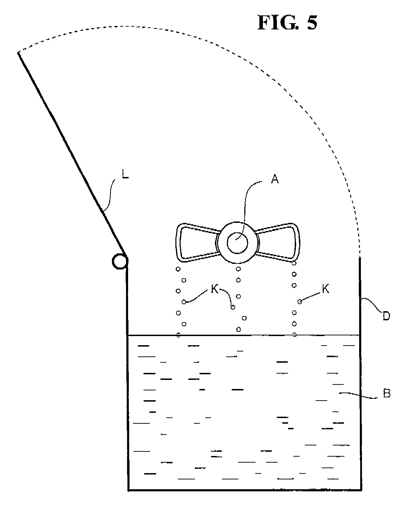

Fig. 5 shows that the resin model is brought up form the container (D) of the two-pack reaction hardening type urethane resin solution (B) and that the rest of the two-pack reaction hardening type urethane resin solution (B) is fallen down from the resin model (A) as drops (K). In this condition, when the work life has passed, the two-pack reaction hardening type urethane resin solution (B) impregnated in the resin starts to be hardened, so that it becomes tack-free 5 to 30 minutes later and it is hardened. The above mentioned is a resin hardening step. Note that the mark (L) indicates a cover portion.

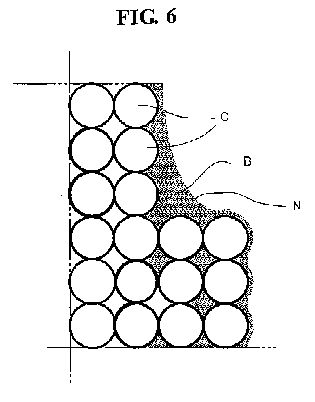

Fig. 6 shows enlargement of circumferential portion of the resin model (A) after the resin hardening step. It shows that the resin solution (B) is stuck and hardened on surfaces of layers of polystyrene particles (C) laminated like stairs and it results that stairs-like surface M is changed to a circumferential surface N. Namely, it shows that a uneven surface shown in Fig. 2 has been smoothed.

Hereinafter, the two-pack reaction hardening type urethane resin solution (B) is explained.

The two-pack reaction hardening type urethane resin solution (B) consists of two components such as a polyisocyanate component (a) and a polyol component (b). The polyisocyanate component (a) is a compound containing at least two isocyanate groups in a single molecule. The isocyanate groups, which are functional groups with an extremely high level of reactivity, react with hydroxyl groups containing active hydrogen, amino groups and thiol groups. Since isocyanate groups generally react with amino groups and thiol groups instantaneously, they are normally used only in combination with a less reactive isocyanate component or less reactive aromatic amines, but they still react fairly quickly and for this reason, such a combination is not commonly used.

The polyisocyanate component (a) may be constituted with an aromatic polyisocyanate, an aliphatic polyisocyanate, or an alicyclic isocyanate. Typical examples of the aromatic polyisocyanate include tolylenediisocyanate and diphenylmethane diisocyanate. Due to the particulars of its chemical reaction manifesting during the production process, tolylenediisocyanate is obtained as a mixture of various isomers, and various industrial products with varying mixing ratios of the 2,4-body and the 2,6-body, e.g., TDI-100 (2,4-TDI 100%), TDI-80 (2,4-TDI 80%, 2,6-TDI 20%) and TDI-65 (2,4-TDI 65%, 2,6-TDI 35%), are commercially available. Likewise, due to the particulars of the chemical reaction occurring during the manufacturing process, diphenylmethane diisocyanate, too, is obtained as a mixture of various isomers, and is used in the form of either pure MDI or polymeric MDI in industrial applications. The pure MDI is a dicaryonic, whereas the polymeric MDI is a multicaryonic. While the pure MDI is isolated through distillation, the polymeric MDI is obtained as residue. Since the number of multicaryons in the polymeric MDI changes under different manufacturing conditions, various types of polymeric MDI are produced and are offered as commercial products by numerous manufacturers. In addition, other examples of aromatic polyisocyanates include napthalene diisocyanate achieved by adding an isocyanate group to a napthalene nucleus and tolidine diisocyanate. Examples of the aliphatic polyisocyanate include hexamethylene diisocyanate, isophorone diisocyanate, xylene diisocyanate and lysine diisocyanate. The alicyclic polyisocyanate may be hydrogenated xylene diisocyanate obtained by hydrogenating xylene diisocyanate or hydrogenated MDI obtained by hydrogenating MDI.

Generally speaking, polyisocyanate components are highly reactive and, in particular, volatile polyisocyanate components are highly toxic. For this reason, they are normally used after undergoing various types of metamorphisms. Such a metamorphism may be urethane modification, dimerization, trimerization, polycarbonimidization, urea modification, prepolymerization and blocking. Through these metamorphisms, self condensation is induced by taking advantage of the higher reactivity of the isocyanate groups, or the isocyanate groups are joined via an active component while leaving a terminal isocyanate group.

The multifunctional polyol component (b) may be a low molecular polyol, a polyether a polyol, an amine polyol, a polyester polyol, an acrylic polyol or a polybutadiene polyol. Alternatively, castor oil and its derivatives may also be used to constitute the multifunctional polyol component (b).

Examples of the low molecular polyol include ethylene glycol, propylene glycol, 1-4 butanediol, glycerine, trimethyl propane, and pentaerythritol.

The polyether polyol may be a polyether polyol achieving a specific molecular weight obtained by adding ethylene oxide or propylene oxide into the low molecular polyol. A primary or secondary terminal hydroxyl group can be achieved in the polyether polyol by blending an additional constituent in a specific manner, e.g., by adding ethylene oxide by itself, adding propylene oxide by itself, adding a mixture of ethylene oxide and propylene oxide or adding ethylene oxide and propylene oxide separately in sequence. Various types of polyether polyols with ethylene oxide and propylene oxide rendering diverse hydrophilic/hydrophobic properties in their additional chains can be achieved by varying the reactivity of the hydroxyl group terminal through the different blending methods. These come onto the market.

An amine polyol is a substance achieved by adding ethylene oxide or propylene oxide to a low molecular amine such as ammonia, ethylene diamine or polyethylene polyamine. Thus, the amine polyol, which contains tertiary nitrogen within its molecule, is a polyol retaining an effect of promoting the reaction of isocyanate. This component is indispensable to the present invention in which rapid hardening is performed.

The polyester polyol (b) may be a condensed polyester polyol having a hydroxyl group constituting a molecular terminal achieved by esterifying a dibasic acid and a low molecular polyol. By selecting specific types of dibasic acid and low molecular diol · triol, adjusting the molecular weight and using a small quantity of a multifunctional low molecular polyol, diverse types of polyester polyols can be prepared. In addition, there is also a ε-caprolactam ring-opening polymerization-type polyester polyol. Furthermore, by adding alkylene oxide to them, polyester polyol having polyester chains and polyether chains can be made, so that they are very various.

An acrylic polyol is an acrylic oligomer having a plurality of hydroxyl groups in an acrylic chain, which is formed by polymerizing an acrylic monomer containing a hydroxyl group terminal with methyl acrylate or methyl meta-acrylate. Various types of acrylic polyols formed by selecting specific acrylic monomers and adjusting their molecular weights are commercially available. A liquid resin dissolved in an organic solvent, with a high molecular weight achieved by raising the extent of polymerization to a level at which film formation is enabled, constitutes a paint with superior weather resistance due to slight cross-linking induced by aliphatic polyisocyanate. A polybutadiene polyol is a copolymer of butadiene containing a hydroxyl group at a terminal thereof and a compound having double bonds. It is a polyol with a relatively high level of hydrophobic property.

As a catalyst that promotes urethanizing reaction of the polyol component and the polyisocyanate, a metal catalyst or an amine catalyst may be used. As the metal catalyst, octylic zinc, octylic lead, dibutyltin dilaurate, dibutyltin acetate and the like can be listed up. As the amine catalyst, triethylene diamine, NN-dimethyl piperazine, N-methyl morpholine and the like can be listed up. The catalyst normally added into the polyol component.

The multifunctional polyisocyanate component (a) and the multifunctional polyol component (b) are blended in quantities determined by calculating the NCO radix and the OH radix and setting the NCO/OH ratio of the NCO radix and the OH radix to a value close to 1.0, Besides, when NCO/OH = 1.0, the numbers of the isocyanate groups and the hydroxyl groups are equal to each other and at this setting, the reaction ends when both types of groups are all used in the reaction. In other words, it is a setting at which the maximum strength is realized. In the present invention, NCO/OH ratio is set in a range from 0.7 to 1.0, preferably from 0.7 to 0.9, and more preferably 0.75 to 0.85, by making an average functional radix of the multifunctional polyisocyanate component (a) to 2.1 or greater (preferably 2.0 to 4.0) and making an average functional radix of the multifunctional polyol component (b) to 3.0 or greater (preferably 3.0 to 5.0). Thus, because usage per unit of the polyisocyanate component (a) can be decreased, property such that softening, melting, decomposing and burning are easy to be happened is appeared.

The two-pack reaction hardening type urethane resin solution (B) contains polyether chains as indicated in the chemical structure formula presented below.

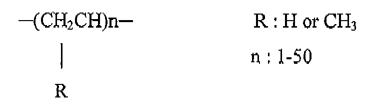

The polyether chain is a soft component and has a chemical structure which is easy to be softened, decomposed and burned. The polyether chains are contained in the two-pack reaction hardening type urethane resin solution (B) within a range from 5 % to 35 %. The range is set in a reason why: because the polyether chains are soft components, when they are contained over 35 %, hardness of the hardening matter becomes smaller than Shore D hardness 65 and rubber elasticity appears strong, so that hardness to the polystyrene powder-sintered laminated resin model becomes unbalance.

Next, the plasticizer (c) used in the present invention is explained.

The plasticizer (c) used in the present invention is an inactive chemical compound having no functional group that induces a chemical reaction with volatility insignificant enough to be disregarded. The plasticizer (c) may be an ester plasticizer, an ether plasticizer or an ester/ether plasticizer. More specifically, typical examples of the ester plasticizer are dioctyl adipate (DOA), dioctyl phthalate (DOP) and dibutyl phthalate (DBP). Alternatively, benzyl acetate, benzoic butyl, benzoic octyl, benzoic isopentyl, ethylene glycol benzoic diester, polyethylene glycol benzoic diester, propylene glycol benzoic diester, poly propylene glycol benzoic diester, ethylene glycol dioleate, polyethylene glycol dioleate, propylene glycol dioleate and polypropylene glycol dioleate. Examples of the ether plasticizer include ethylene glycol dibutyl ether, ethylene glycol diphenyl ether, diethylene glycol diethyl ether, diethylene glycol methyl ethyl ether, diethylene glycol diethyl ether, diethylene glycol ethyl butyl ether, diethylene glycol dibutyl ether, triethylene glycol diethyl ether, triethylene glycol diethyl ether, triethylene glycol diethyl ether, triethylene glycol dibutyl ether, tetraethylene glycol diethyl ether, tetraethylene glycol diethyl ether and the like. Examples of the ethyl/ester plasticizer include ethylene glycol monobutyl ether acetate, diethylene glycol monoethyl ether acetate, diethylene glycol monobutyl ether acetate, diethylene glycol mono phenyl ether acetate and the like.

The plasticizer (c) is used in a quantity that amounts to 2 to 20wt.% relative to the entire weight of the two-pack reaction hardening type urethane resin solution (B). If the content of the plasticizer (c) exceeds 20 wt.%, the plasticizer (c) bleeds over the surface of the resin model readily to cause stickiness. If, on the other hand, the plasticizer (c) is used in a quantity amounting to less than 2wt.% the thermally decomposed and melted resin does not flow out readily during the dewaxing/baking processes since the plasticizer (c), which is a highly viscous liquid at room temperature but has a lower level of viscosity at higher temperatures, is not contained in sufficient quantity. While it is desirable to take full advantage of these characteristics of the plasticizer by using a greater quantity of the plasticizer (c), an excessively high plasticizer content in the resin results in bleeding of the plasticizer over the surface of the hardened matter and the surface becomes tacky and sticky, as described earlier. Accordingly, the present invention was conceived based upon the finding that a maximum content for the plasticizer (c) can be achieved by rapidly setting the resin within less than 5 minutes of working life and trapping the plasticizer (c) having undergone phase separation from the cured resin in the three-dimensional network structure of the cured resin in a state of micro dispersion.

It is preferred that the plasticizer (c) contains polyether chains as indicated in the chemical structure formula presented below.

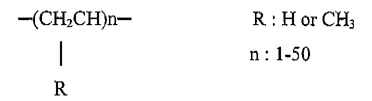

The polyether chain is a soft component and has a chemical structure which is easy to be softened, decomposed and burned. The polyether chains are contained in the plasticizer (c) within a range from 0 % to 80 %.

When liquefied plasticizer (c) is contained at high level, bleeding of the plasticizer is happened over the surface of the hardened matter and the surface becomes tacky and sticky. Accordingly, the present invention was conceived based upon the finding that a maximum content for the plasticizer (c) can be achieved by rapidly setting the resin within less than 5 minutes of the work life and trapping the plasticizer (c) having undergone phase separation from the cured resin in the three-dimensional network structure of the cured resin in a state of micro dispersion.

Such phase separation micro dispersion can be regarded as a state in which the plasticizer (c) is enclosed by the cured resin assuming a honeycomb structure. The cured resin assuming the honeycomb structure has superior physical strength, and the honeycomb structure can also be regarded as a three-dimensional structure within which the plasticizer (c) is secured within the honeycomb and is not allowed to be released to the outside. The structure does not allow the plasticizer (c) to bleed over the surface of the hardened matter to induce tackiness even when the plasticizer is contained at a relatively high ratio. If the phase separation micro dispersion structure is not adopted, the plasticizer is dissolved into the hardened resin, and once it reaches the saturation level, the plasticizer becomes bled over the surface of the hardened matter to result in tackiness. If the extent of bleeding is significant, the surface becomes sticky. The phase separation micro dispersion structure can be observed through an electron microscope. The formation of the phase separation micro dispersion structure needs to be aided by rapidly hardening the resin within a working life of 5 minutes or less, Preferably, the working life should be set to 3 minutes or less, and even more desirably to 1 to 2 minutes. If the work life is set to 5 minutes or more, the process of phase separation micro dispersion cannot be completed with ease, and since it will take a day or more to disengage the model during the model production, the model production will become an extremely slow process.

When the plasticizer (c) is contained in the two-pack reaction hardening type urethane resin solution (B), it needs to be uniformly dissolved in the liquid resin, whereas the phase separation micro dispersion of the plasticizer from the cured resin is promoted during the reactive setting stage so that the micro dispersed plasticizer is trapped by the time the reactive setting process is completed, thereby preventing bleeding of the plasticizer onto the surface. The composition of the two-pack reaction hardening type urethane resin solution must be designed so as to strike an optimal balance by taking into consideration the factors discussed above. Namely, the composition must be designed within the range over which the hydrophilic and hydrophobic properties of the plasticizer (c) and the reactive setting resin are perfectly balanced. For this reason, it is effective to form the hydrophilic segment with an alkylene oxide chain and to form the hydrophobic segment with a hydrocarbon chain. The properties of the hydrophilic segment and the hydrophobic segment are determined by selecting a specific type of raw monomer. A certain degree of dissociation should be assured with regard to the balance between the hydrophilic property and the hydrophobic property. If the two-pack reaction hardening type urethane resin solution (B) contains a large number of ethylene oxide chains, the hydrophilic property becomes more pronounced, whereas if the ethylene oxide chains are replaced with propylene oxide chains, the level of hydrophilic property is lowered. If ethylene oxide chains or propylene oxide chains are used in a smaller quantity, the hydrophobic property of the two-pack reaction hardening type urethane resin solution (B) becomes more pronounced. By adjusting the types of hydrophobic and hydrophilic segments and their quantities the hydrophilic property and the hydrophobic property of the two-pack reaction hardening type urethane resin solution (B) can be adjusted over a specific range. In addition, by adjusting the type and quantity of the plasticizer (c), the hydrophilic property and the hydrophobic property of the plasticizer (c) itself can be adjusted within a certain range. For instance, if the terminal of the plasticizer is constituted with alkyl ether, the level of the hydrophobic property increases as it changes to methyl ether, to ethyl ether, to butyl ether, and then to phenyl ether. By adjusting the chemical structure and the quantity of the plasticizer (c) and also by adjusting the chemical structure and the quantity of the two-pack reaction hardening type urethane resin solution (B), the range over which the phase separation micro dispersion is achieved can be controlled. These the hydrophilic segments and the hydrophobic segments are connected so as to take three-dimensional network structure in a chemical reaction such as light/heat radical polymerization or cationic polymerization of double bond monomer, epoxy / amine addition condensation, polyol /polyisocyanate additional condensation or the like.

Content of the plasticizer (c) liquefied at normal temperature in the two-pack reaction hardening type urethane resin solution (B) set under thus balance is within a range from 10 to 30 wt. %. When the content exceeds 30 wt. %, it exceeds suitable quantity of the phase separation micro dispersion, so that the bleeding of the plasticizer (c) is happened over the surface of the hardened matter and the surface becomes tacky and sticky. When the content becomes lower than 10 wt. %, heating, decomposition and flown-off of the resin model in the dewaxing / burning process becomes worse, it causes to cracks.

On the other hand, it is found that to embed alkylene oxide chains indicated in the chemical structure formula presented below into a resin framework or a plasticizer molecule.

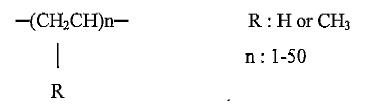

The alkylene oxide chain is a soft component and a segment easy to be softened, decomposed, melted or burned off at heating or at high temperature. Because the segments are distributed in the hardened resin, melting, decomposing, flown-off and burn-out is completed suitably. The alkylene oxide chains are embedded in a hardening type resin body or the plasticizer, and contained in the two-pack reaction hardening type urethane resin solution (B) constituting of the reaction hardening type resin body and the plasticizer within a range from 5 to 30 wt. %, preferably 10 to 25 wt. %. When the content exceeds 30 wt. %, because the resin becomes very soft, the model is difficult to hold a shape of itself. When the content becomes lower than 5 wt. %, because the softening, decomposing and burning performance become worse at heating or at high temperature, burned-off performance as a burned-off model is damaged.

Thus, to setting for resin composition of the two-pack reaction hardening type urethane resin solution (B), balance between hydrophilic nature and hydrophobic nature of the resin and the plasticizer, balance between the resin quantity and the plasticizer quantity, balance between speed of hardening and hardness of the hardening matter and the like are concerned mutually, a suitable extent in which they are balanced well is a extent claimed in the present invention.

An embodiment of the two-pack reaction hardening type urethane resin solution (A) is as follows.

34.0 wt. units of crude MDI (NCO = 32%) and 14.0 wt. units of 2-ethyl hexyl adipate to be used as a plasticizer were placed in a three-neck flask, and 2.0 wt. units of polypropylene glycol (MW = 200) was added into the mixture after dissolving evenly, and the resulting mixture was evenly agitated to ensure that the added substances were dissolved, the mixture was gradually heated and was agitated for 5 hours at 80°C, thereby being a urethane prepolymer with NCO at its terminals was thus formed by urethanization. Next, 0.01 wt. units of an antifoaming agent was added and blended into the mixture, thereby forming a polyisocyanate component (a).

Next, 5.0 wt. units of ethylene diamine propylene oxide adduct (MW = 300), 28.0 wt. units of trimethylol propane propylene oxide adduct (MW = 4400) and 17.0 wt. units of 2-ethyl hexyl adipate to be used as a plasticizer were placed in a four-neck flask, and the mixture was thoroughly blended and then dehydrated by agitating the mixture for one hour at 100°C in a vacuum while allowing nitrogen gas to be absorbed therein through capillaries. Cooling down not more than 50 °C, 0.01 wt. units of an anti-foam agent and 0.5 wt. units of hindered phenol system anti-oxidizing agent were placed into them, and the mixture was agitated evenly during one hour at 70 °C to be mixed. Xylene solution with zinc octoate of 1 % was added into the mixture to adjust the work time to 3 minutes, thereby forming a polyol component (b). The blending ratio of the multifunctional polyol component and the multifunctional polyisocyanate component was 1:1 (by weight). Besides, an adhesive property of polystyrene powder-sintered laminated casting matter used in smoothing of the present invention and the two-pack reaction hardening type resin was evaluated, the result is good as follows.

### (Adherent test)

Test specimens for evaluating an adhesive property are prepared. Polystyrene powder-sintered laminated plates as the test specimen were polished by sandpaper to make the surfaces flat. The sintered and laminated plates were impregnated in the two-pack reaction hardening type urethane resin solution described in the above embodiment, and was picked up from it after decreasing pressure, and the test specimen was formed by being dried and hardened during 30 minutes and the test specimen was formed by being dried and hardened during one day. A flat surface of each test specimen is cut crosswise at intervals of 1 mm to form one hundred squares. An adhesive tape was put on the surface with one hundred squares and then it was taken off from the surface vigorously, and then exfoliation of two-pack reaction hardening type resin solution hardening layers was judged visually.

### (The result of the test)

As a result, there was no exfoliation in both of 30 minutes drying and hardening test specimen and one day drying and hardening test specimen, namely no exfoliation was happened at 100/100.

### (Test for smoothing surface)

Test specimens were prepared. A polystyrene powder-sintered laminated plate is made to a non-treatment specimen, and a polystyrene powder-sintered laminated plate performed with smoothing treatment according to the present invention is made to a specimen for evaluation. Smoothness of each surface of the specimens was judged by light finger touch to them to be evaluated by feeling.

### (The result of the test)

As a result, roughness of the surface of the non-treatment specimen was felt strongly, but roughness of the polystyrene powder-sintered laminated plate performed with smoothing treatment according to the present invention was felt little.

### INDUSTRIAL APPLICABILITY

As explained above, according to the present invention, by impregnating the two-pack reaction hardening type urethane resin solution into the porous surface of the powder-sintered laminated model;
(1) Because the two-pack reaction hardening type urethane resin solution is very low viscous, mixture of the two-pack is completed rapidly, the air of the internal space communicating to the outside is changed to the two-pack reaction hardening type urethane resin solution easily by impregnating the porous powder-sintered laminated model and decreasing pressure, so that the effect of impregnation is appeared.
(2) Because the two-pack reaction hardening type urethane resin solution is very low viscous, the unnecessary rest of the resin solution is dropped down soon at bringing up after the impregnation, so that the effect of even coating is appeared.
(3) Because the two-pack reaction hardening type urethane resin solution is whitened after passing the work time of it after finishing the impregnating step, progress of hardening can be judged visually.
(4) Because the two-pack reaction hardening type urethane resin solution is tack-free 30 to 60 minutes later after passing the work time of it after finishing the impregnating step, it is possible to carry the model soon.
(5) Because the two-pack reaction hardening type urethane resin solution is a reaction hardening type, good adhesive property to the solid surface is achieved. Besides, because porous rough surface is coated in a partly impregnating condition to appear an anchor effect, so that the adhesive property becomes better.
(6) An Effect that the polystyrene fine particles prevent dropping down from the surface of the porous powder-sintered laminated model and the strength of the whole model can be increased is appeared.
(7) Because the bending strength of a thin edge portion of the model can be increased, an effect that damage due to a little stress can be prevented is appeared.
(8) An effect that a surface of a hollow part of the porous powder-sintered laminated model can be smoothed is appeared. Especially, it is the most suitable to the model having a hollow part through which the fluid is flown. In this point, a usual blush painting technique or a spray painting technique can not be done.
(9) Because the liquefied plasticizer and heat-decomposed low molecular compositions are flown off in the hardening layer of the two-pack reaction hardening type urethane resin solution in the dewaxing step, it has a dewaxing effect.
(10) Because the hardening matter of the two-pack reaction hardening type urethane resin solution is constituted of compositions easy to be softened and decomposed by heat, it is burned off in the burning step when it is used as a model for the lost wax precision casting, the rest after burning is very little.
(11) When the model is used as a model for the lost wax precision casting, a casting surface of a precision casting article becomes very smooth, it is recognized that appearance in a finish condition of the casting article becomes better.
(12) It is preferred that the internal surface in a hollow precious casting article such as a manifold through which gas or fluid is flown is smooth, and in this point, there is large significance in the method for producing according to the present invention. The above mentioned effects are appeared.

## Claims

1. A method for smoothing a surface of a powder-sintered laminated resin model with a porous rough surface **characterized by** comprising:
a resin impregnation step of dipping said powder-sintered laminated resin model (A) in a two-pack reaction hardening type urethane resin solution (B) with a work life of 1 to 5 minutes and viscosity of 7 to 30 Pas and then decreasing pressure so as to impregnate said surface of said resin model (A) with said two-pack reaction hardening type urethane resin solution (B); and
a resin hardening step of bringing up said powder-sintered laminated resin model (A) impregnated with said two-pack reaction hardening type urethane resin solution (B) from said two-pack reaction hardening type urethane resin solution (B) and hardening said resin model (A).

2. A method for smoothing a surface according to claim 1, **characterized in that** said two-pack reaction hardening type urethane resin solution (A) preferably comprises multifunctional polyol component (a), multifunctional polyisocyanate component (b) and a plasticizer component (c), and an average functional group of the multifunctional polyol component (a) is preferably in a range from 2.0 to 4.0, an average functional group of the multifunctional polyisocyanate component (b) is preferably in a range from 3.0 to 5.0, and a ratio NCO/OH is preferably in a range from 0.7 to 1.0.

3. A method for smoothing a surface according to claim 1 or 2, **characterized in that**:
said two-pack reaction hardening type urethane resin solution (A) preferably contains a plasticizer component (c) of 10 - 30 % which is in a liquid state at normal temperature and polyether chains having a chemical structure indicated in the chemical structural formula as follows at 5 - 35 wt% thereof;

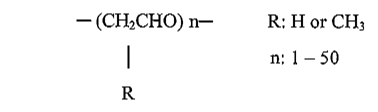

4. A method for smoothing a surface according to claim 1, 2 or 3, **characterized in that**:
said plasticizer component (c) is preferably micro-dispersed through phase separation at raid reaction hardening of the two-pack reaction hardening type urethane resin solution (B).

5. A process for lost wax precision casting using said powder-sintered laminated resin model having a surface smoothed by said method according to any one of claims 1 to 4.
